# EUROPEAN PATENT APPLICATION

(11) **EP 2 578 379 A1**
(43) Date of publication of application: **10.04.2013**
(21) Application number: 11008055.3
(22) Date of filing: 05.10.2011
(51) Int. Cl.: B29C 49/00, B29C 49/04, F24J 2/04, F24J 2/52, F24J 2/20, F24J 2/34, F24J 2/46, F24J 2/51

(54) **Solar thermal solutions using blow moulding technologies**

(71) Applicant: Sumika Polymer Compounds (France) SA, 13310 Saint Martin de Crau (FR); EXCELL CORPORATION, Tokyo (JP)
(72) Inventor: Bollaert, Franck, 30000 Nimes (FR); Nishio, Hideaki, Portsmouth PO1 3 TH (GB); Nakagawa, Gota, Tokyo (JP)
(74) Representative: Santarelli

(57) **Abstract**

This invention relates to the use of plastic material in order to make a solar thermal collector/panel and a modular independent hot water storage unit using blow moulding technologies

## Description

The invention falls within the field of solar thermal panels, more particularly the field of the manufacturing of components for solar thermal applications: solar panels and hot water storage units.

Solar panels are the basic components of equipment for solar energy production.

A solar panel is an item of equipment capable of converting a part of the energy from the sun's beams into electric power or thermal energy heating.

Solar thermal panels, or solar thermal collectors, convert into heat that is recovered and used in the form of hot fluid, for example air or water.

Solar thermal panels are usually flat or parabolic, having a surface area ranging from around one square meter to several square meters (for example 2 to 6 square meters). Standard dimensions are generally defined in order to facilitate and optimize installation.

There are two types of solar thermal panels: liquid-type collectors and air-type collectors.

In "liquid-type" solar collectors the water, or more often a heat transfer fluid (based on glycol for example), circulates in tubes in a closed circuit. In "air-type" solar collectors, air circulates and is heated on contact with the absorbers. The air heated in this way is then circulated into buildings for heating or for example into agricultural buildings for drying the productions.

Solar thermal technology can be used for applications other than heating rooms, such as for example heating fluids in industrial facilities, for example chemical production sites, solar air conditioning of rooms, or even seawater desalination.

Thus, solar thermal panels are generally constituted by at least one circuit for the circulation of heat transfer fluid that heats the water into a tank, thus making it possible to store the energy produced.

These panels are generally constituted by different sub-elements suitable for assembly, such as a glass window, coil or fluid circuit, box, insulation, etc.

Assembling the different components of such a solar panel significantly increases its cost and weight. Moreover, increasing the number of base elements assembled can lead to the occurrence of thermal bridges and/or thermal gradients in the structure of the solar panel that can have undesirable consequences such as for example deformation of the assembly, which can result in sealing defects, the occurrence of condensation or thermal losses that will affect the performance of the equipment.

Moreover, the use of a glass window allows the sun rays to be concentrated, increasing the efficiency of the solar panel, in particular in countries where there is lower insolation. On the other hand, installing a glass window has drawbacks:
- The glass window can represent up to 70%-80% of the weight of the solar panel, making it difficult for a single person to handle during mounting on a roof.
- The glass window can generate a hot spot inside the panel in degraded working conditions, when the sun rays are intense and the installation is not operating (as the heat transfer fluid circulation pump is stopped). This hot spot can reach 200 to 220°C, requiring the use of components with enhanced thermal resistance, and increasing the cost of the collector.

A need exists for solar thermal panels that do not have the disadvantages of the prior art.

It would therefore be a benefit to be able to provide a novel solar thermal panel that does not have the disadvantages of the known solar panels of the prior art. One of the aims of the invention is to propose the use of extrusion blow moulding technology in order to obtain a solar thermal panel that is:
- complete and moulded in a single step
- suitable for hot countries with high insolation and does not have glass windows
- the cost of which can be reduced by 50 to 80% in comparison with the existing solutions.

Moreover, in the existing prior art, the hot water storage units (essentially large-diameter containers/tanks) connected to the solar panels pose problems as they are difficult to handle and difficult to incorporate into buildings. Some are constituted by prefabricated elements that are mounted or welded on-site. Moreover, they are more suitable for large buildings than small ones like single-family houses.

In order to keep the water at the right temperature, these require the use of substantial layers of insulation and the input of external energy, often of electrical origin, via heating units.

After lengthy testing, the applicant has developed moulded containers, more particularly a solar thermal panel and a storage unit for heated water, suitable for use in solar thermal applications, which do not have the disadvantages of those of the prior art.

Thus the invention aims to cover the use of extrusion blow moulding technology in order to obtain a container suitable for use in solar thermal applications.

According to a first aspect of the invention, the moulded container can be a solar thermal panel.

The use of extrusion blow moulding technology has allowed the applicant to develop a complete solar panel that is moulded in a single step, suitable for hot countries, light, inexpensive, and has excellent technical qualities.

The extrusion blow moulding technique is a forming for polymer materials that is used to produce hollow bodies of varying capacities (from a few cm³ to a few m³), such as bottles, flasks, drums, casks, etc.

This extrusion moulding process consists of combining the technique of with that of blow moulding. A tube of extruded raw material () is then enclosed in a clamshell blow mould that has the desired shape. Pressurised air (or an inert gas) is then blown into the parison in order to push the deformable raw material against the inner walls of the mould. After blowing, the raw material is cooled and the piece to be moulded is thus fixed in its final shape.

This basic principle has been improved by different technologies, allowing for three-dimensional parts to be produced in all shapes and all geometric figures. Any extrusion/blow moulding technique (standard, by suction, tilting mould or flat open mould) known in the prior art can be used according to the invention, in particular the technique described in patents or patent applications US 4,362,688 (Excell Corporation), US 5,723,828; EP 0701083; W02011/077719 (JP8068490) (Excell Corporation).

The inventors have shown that it is possible to produce a solar thermal panel using this technology. It is understood that according to the invention, the parison can be enclosed in a mould, which, by its shape, can make it possible to obtain, at the output of the process, a solar panel that has within it a hollow matrix (a cavity), in which the heat transfer fluid circulates from an entry point to an exit point of the solar thermal panel.

The solar thermal panel can adopt any shape required, and in particular the shape of a regular or irregular parallelepiped. The size of the solar panel that can be produced by this technology can be up to several square metres, in particular standard sizes comprised between 2 and 2.5 m².

In the conventional design comprising: a frame, metal or otherwise; a tube bundle or coil; a glass window and insulation, it is possible to produce the frame by using extrusion blow moulding of plastic materials. It is possible to make the frame in one or several blow molded parts that are then assembled by welding, bonding, screwing or any other technique allowing for leaktight assembly.

According to a variant, the solar thermal panel can be monobloc. By monobloc is meant according to the invention that the solar panel can be made of a single piece. This means that the component moulded by the extrusion blow moulding technology has a unitary structure, meaning that there is no need to assemble the different pieces together, the fluid circuit being incorporated into the blow moulded part. Thus ultimately a solar thermal panel having greater integrity will be achieved. Due to the absence of connections, little maintenance is necessary.

According to the invention, the solar thermal panel according to the invention can be moulded in colours, for example by using master batches during the moulding stage or by in-mould decoration using a decorative film. The solar panel according to the invention can be for example directly moulded in black, which avoids painting after blowing.

According to the invention, the solar thermal panel can be made of plastic materials that can comprise one or more polymers chosen from the polymers usually used in industry: aliphatic or aromatic polyamide (PA), mixture of polyphenylene ether such as polyphenylene ether/polystyrene/butadiene alloy (PPE/PS), polyphenylene ether/polyphenylene sulphone alloy (PPE/PPS), polyphenylene ether/polypropylene alloy (PPE/PP), polyphenylene ether/polyamide alloy (PPE/PA), polyethersulphone (PES), polyphenylene sulphone (PPS), polyester, polybutylene terephthalate (PBT), Liquid crystalline polyester (LCP), polyolefins such as polypropylene (PP), polyethylene (PE), polymethylpentene (PMP), polybutene-1 (PB-1); or any other plastic materials that can be transformed by extrusion. Preferably the plastic material can be a polyolefin such as polypropylene (PP), polyethylene (PE), polymethylpentene (PMP), polybutene-1 (PB-1), even more preferably polypropylene, for reasons of low density, cost and recyclability. According to a particular embodiment of the invention, the plastic material can be bio-sourced. By way of example of a bio-sourced plastic material, mention can be made of material derived from origins other than oil, such as for example a biopolymer like PLA (polylactic acid) or PHA (polyhydroxyalkanoate), a material of vegetable origin such as a starch derivative.

According to another particular embodiment of the invention, the plastic material can be a mixture of at least one bio-sourced plastic material and at least one polyolefin from the above mentioned list. An example of a plastic material based on polyolefins and starch derivatives is the material produced by Cardia or Flourplast. In the case of a mixture of materials of vegetable origin with polyolefins such as polypropylene or other polymers chosen from the above mentioned list, the addition of compatibility agents such as those sold by Sumitomo Chemical under the trade mark Igetabond® can be envisaged.

According to a particular embodiment of the invention, all or part of the plastic material can comprise recycled or regenerated material according to the criteria defined for example in the environmental charters of the automotive or other industries.

According to yet another particular embodiment of the invention, one or more reinforcing filler(s) of any type can be added to the plastic material. In this respect mention can be made for example of mineral or organic fillers, nanoparticles, conductive fillers, long or short glass fibres, organic fibres and natural fibres.

Advantageously the use of thermoplastic materials based on natural and/or organic fibres allows for the moulded parts to be made lighter.

It is also possible to use a mixture of fillers, in order to limit the risks of deformation or warpage during or after moulding. For example, with glass fibre it is possible to use a filler such as for example talc or calcium carbonate.

Thermoplastic compounds materials can be chosen for example from the Thermofil^{®} range made by Sumika Polymer Compounds.

According to yet another embodiment of the invention, it is possible to add to the thermoplastic material at least one flame-retardant filler, with or without halogens, in order to add fire protection.

According to yet another embodiment of the invention, it is possible to add strong UV-Stabilizers or high heat stabilisation package, in order to prevent any degradation during the life time of the solar panel.

According to the invention, the use of this technology makes it possible to produce a solar panel of any size, including very large size, preferably flat, that has no residual deformations after moulding.

Another advantage of the invention is that the process that allows for the fabrication of the solar thermal panels according to the invention allows for direct incorporation at the moment of blow moulding of features essential to the satisfactory operation of a solar panel, whereas in the techniques of the prior art, these features are generally added onto the solar panel after its production (roof fastenings, connection technology for connecting to the collector).

The solar thermal panel according to the invention can thus also comprise means for external connection. By external connection means is meant for example a connection making it possible to link the solar thermal panel to, for example, a system conveying the fluid to be heated in the solar thermal panel, or also the fluid once heated, either to a place where it can be stored, or to a place where it can be used. According to the invention, it is understood that these connection means are included in the solar thermal panel during the process of moulding the solar thermal panel, i.e. at the moment when the parison is placed in the mould or before.

Thus, for example, during the production stage, plastic or metal inserts can be positioned in the mould in order to be over-moulded or to be attached to the plastic moulded part allowing the solar panel to be connected to the heat transfer fluid circuit.

The solar thermal panel according to the invention can be used directly, without another element, the constituent raw material thereof absorbing heat from the sun rays and returning it to the fluid circulating inside the solar thermal panel.

In order to achieve greater efficiency, the solar thermal panel can be placed in an insulated glazed moulded frame in order to obtain a effect. Thus, according to a form of the invention, the solar thermal panel can also comprise a moulded frame, preferably formed by extrusion blow moulding, advantageously glazed, and advantageously insulating.

Moreover, the invention allows for solar panels of all shapes to be produced: spherical, flat or parabolic, easily incorporating all sorts of additional elements in order to improve the performance of the solar panel.

It is also possible to incorporate, during moulding of the solar panel, means that are useful for the use of the solar thermal panel, such as for example external fastening means or means of suspension, by over-moulding. These means can be added to the solar thermal panel, such as for example according to the technique described in document EP 0 701 083.

It is also possible to incorporate, during moulding of the solar panel, one or more sealing means such as gaskets or 0-rings, for example made of elastomer (for example gaskets made of thermoplastic elastomers such as for example in the olefinic thermoplastics, dynamically vulcanized (TPV) or otherwise (TPO) such as for example those sold under the trade marks Espolex® (Sumitomo Chemical) or Santoprene®.

It is also possible to incorporate, during moulding of the solar thermal panel, one or more means of fastening the solar panel to a support, for example a roof, with the possibility of varying the inclination of said supports in order to increase the efficiency of the solar thermal panel. It is also possible to produce solar thermal panels that could be incorporated into their support such as for example the wall of a building. Thus, for example, during the production stage, plastic or metal inserts can be positioned in the mould in order to secure attachment points, metal or otherwise, allowing for the solar panel to be fastened onto a building or any other support for which it is intended.

The solar thermal panel according to the invention can also comprise insulation, advantageously made of glass wool. The low pressure of the moulding technology used (nature of blow moulding) does not destroy the texture of insulation material like glass wool or fabric.

According to a variant of the invention, it is possible to add, during moulding, for example locking clips, reinforcements, or any other element capable of being obtained by moulding.

According to another embodiment of the invention, the outer surfaces of the solar thermal panel, independently or simultaneously, can be coated with a material intended to ensure efficient absorption of solar radiation. According to this embodiment, the film can be affixed by deposition in the mould during the process.

One of the great advantages of the solar thermal panels according to the invention lies in the significant reduction of the assembly time of the panel (complete for the monobloc panel or partial for the conventional architecture with only the frame produced by extrusion blow moulding), as well as a significant reduction in the weight (from 10 to 80 %) depending on the features incorporated into the solar panel itself. These savings increase the ease of transport as well as installation, linked to the reduction in weight, which results in lower costs, as well as a lower CO₂ impact on the environment.

The occurrence of thermal bridges is also significantly reduced in solar panels according to the invention.

The ease of dismantling (linked to the reduced number of components or sub-assemblies of components) of the solar thermal panels according to the invention facilitates the recycling of said components, in particular with the use of plastic materials based on polypropylene, which do not give off toxic substances.

The reduction of the impact on the environment linked to the elimination of surface treatments and painting of the collector, since it is possible to decorate the panels by moulding in colours or lamination of plastic or aluminized films, is moreover significant.

Finally, the freedom of shape that the design of parts made of thermoplastic materials allows must enable improved integration of the solar equipment into its environment (for example, incorporation into walls or on the roof of a building).

Advantageously, said solar thermal panel can moreover comprise, independently or simultaneously, one or more support(s) of the water or air circuits, one or more reinforcing element(s), one or more additional insulant(s), one or more heat absorber(s), generally constituted by a metal plate, said absorber itself being capable of being covered with a material that improves its performance, said absorber also capable of being coupled to the water or air circuit.

According to another aspect of the invention, the use of extrusion blow moulding aims to obtain a container that can be used in thermal solar applications that can be a unit for the storage of hot fluid, preferably hot water, produced for example by a solar panel according to the invention.

The present invention remedies the problems of the prior art by proposing to produce a modular storage unit (depending on the location and geometry of the storage site) constituted by sub-elements produced by extrusion blow moulding and comprising cartridges containing a fluid the phase transition with temperature of which ensures that the required temperature is maintained.

According to an aspect of the invention, the hot water storage unit can make it possible to keep the hot water at the required temperature without any energy input other than from renewables (photovoltaic solar panels or wind turbines).

According to the invention, in order to ensure that the temperature is maintained in a sustainable manner, additional energy input can be necessary for heating the fluid. It is possible to envisage connecting the cartridges to a photovoltaic solar panel. This thus makes it possible for the installation to be completely independent of non-renewable energy.

The basic technique of heating cartridges containing a fluid the phase transition of which ensures temperature maintenance is known and was developed by Sumitomo Chemical and sold under the trade mark SUMITHERMAL^{®} for underfloor heating of buildings.

The applicant has successfully produced, by extrusion blow moulding, different hot water tanks incorporating these SUMITHERMAL^{®} cartridges.

The hot water tanks and the cartridges can be assembled together or can be produced in a single unit by the extrusion blow moulding technology as described in the above-mentioned patents of Excell Corp. The main water tank can contain various walls that can keep the hot water separate from the phase transition fluid.

The storage unit can adopt any shape desired, and in particular the shape of the free space available for the storage. The size of the storage unit that can be produced by this technology can be up to a few cubic meters, for example from 1 to 100 cubic meters. By connecting storage units together, a big storage volume can be available and it is really adapted to the required storage volume. It is very modular architecture.

According to a variant, the storage unit can be monobloc. By monobloc is meant according to the invention that the storage unit can be made of a single piece.

According to the invention, the storage unit according to the invention can be moulded in colours, for example by using master batches during the moulding stage or by in-mould decoration using a decorative film.

According to the invention, the storage unit can be made of plastic materials that can comprise one or more polymers chosen from the polymers usually used in industry: polypropylene (PP), polyethylene (PE), polymethylpentene (PMP), polybutene-1 (PB-1), aliphatic or aromatic polyamide (PA), mixture of polyphenylene ether such as polyphenylene ether/polystyrene/butadiene alloy (PPE/PS), polyphenylene ether/polyphenylene sulphone alloy (PPE/PPS), polyphenylene ether/polypropylene alloy (PPE/PP), polyphenylene ether/polyamide alloy (PPE/PA), polyethersulphone (PES), polyphenylene sulphone (PPS), polyester, polybutylene terephthalate (PBT), Liquid crystalline polyester (LCP), or any other plastic materials that can be transformed by extrusion. Preferably the plastic material can be polypropylene, for reasons of low density, cost and recyclability.

According to a particular embodiment of the invention, the plastic material can be bio-sourced. By way of example of a bio-sourced plastic material, mention can be made of material derived from origins other than oil, such as for example a biopolymer like PLA (polylactic acid) or PHA (polyhydroxyalkanoate), a material of vegetable origin such as a starch derivative, alone or optionally mixed with one or more polyolefins such as polypropylene or another polymer from the above mentioned list. An example of a plastic material based on polyolefins and starch derivatives is the material produced by Cardia or Flourplast. In the case of a mixture of materials of vegetable origin with polyolefins such as polypropylene or other polymers chosen from the above mentioned list, the addition of compatibility agents such as those sold by Sumitomo Chemical under the trade mark Igetabond® can be envisaged

According to a particular embodiment of the invention, all or part of the plastic material can comprise recycled or regenerated material according to the criteria defined for example in the environmental charters of the automotive or other industries.

According to yet another particular embodiment of the invention, one or more reinforcing filler(s) of any type can be added to the plastic material. In this respect mention can be made for example of mineral or organic fillers, nanoparticles, conductive fillers, long or short glass fibres, organic fibres and natural fibres.

Advantageously the use of thermoplastic materials based on natural and/or organic fibres allows for the moulded parts to be made lighter.

It is also possible to use a mixture of fillers, in order to limit the risks of deformation or warpage during or after moulding. For example, with glass fibre it is possible to use a filler such as for example talc or calcium carbonate.

Thermoplastic compounds materials can be chosen for example from the Thermofil® range made by Sumika Polymer Compounds.

According to yet another embodiment of the invention, it is possible to add to the thermoplastic material at least one flame-retardant filler, with or without halogens, in order to add fire protection.

According to yet another embodiment of the invention, it is possible to add UV-Stabilizers or high heat stabilisation package, in order to prevent any degradation during the life time of the solar panel...

Another advantage of the invention is that the process making it possible for the solar thermal panels according to the invention to be produced allows for direct incorporation at the moment of blow moulding of features essential to the satisfactory operation of the storage unit, whereas in the techniques of the prior art, these features are generally added after production (roof fastenings, connection technology).

The storage unit according to the invention can thus also comprise means for external connection.

Moreover, the invention allows for storage units to be produced in any shape, spherical, flat, easily incorporating all sorts of additional elements in order to improve the performance of the storage unit.

It is also possible to incorporate, during moulding of the storage unit, one or more means such as for example external fastening means or suspension means, by over-moulding.

It is also possible to incorporate, during moulding of the storage unit, one or more sealing means such as gaskets or connecting pipes (in order to connect the storage units to each others), for example made of elastomer (for example made of thermoplastic elastomers such as for example in the olefinic thermoplastics, dynamically vulcanized (TPV) or otherwise (TPO) such as for example sold under the trade marks Espolex® (Sumitomo Chemical) or Santoprene®

It is also possible to incorporate one or more means of fastening the storage unit to a support, for example a roof.

According to a variant of the invention, it is possible to add, during moulding, for example locking clips, reinforcements, or any other element capable of being obtained by moulding.

Finally, the freedom of shape that the design of parts made of thermoplastic materials allows should enable improved incorporation of the solar equipment into its environment (for example, incorporation into walls or on the roof of a building).

A person skilled in the art understands that the techniques used in the present invention and the dimensions applicable are data that are commonplace in these fields, and will have no difficulty in implementing them.

According to a variant of the invention, the sub-elements produced by extrusion blow moulding and comprising cartridges containing a fluid the phase transition with temperature of which ensures that the required temperature is maintained, could be connected to solar panels and/or incorporated in solar panel.

That combined system allows producing hot water at the right temperature even when the external temperature is decreasing

## Claims

1. Use of extrusion blow moulding technology in order to obtain a container suitable for use in thermal solar applications.

2. Use according to claim 1, **characterized in that** the moulded container is a solar thermal panel.

3. Use according to claim 1 or 2, **characterised in that** the solar thermal panel is monobloc.

4. Use according to any one of claims 1 to 3, **characterized in that** the solar thermal panel is made of a material chosen from polymers such as polypropylene (PP), polyethylene (PE), polymethylpentene (PMP), polybutene-1 (PB-1); aliphatic or aromatic polyamide (PA), mixture of polyphenylene ether such as polyphenylene ether/polystyrene/butadiene alloy (PPE/PS), polyphenylene ether/polyphenylene sulphone alloy (PPE/PPS), polyphenylene ether/polypropylene alloy (PPE/PP), polyphenylene ether/polyamide alloy (PPE/PA), polyethersulphone (PES), polyphenylene sulphone (PPS), polyester, polybutylene terephthalate (PBT), Liquid crystalline polyester (LCP), preferably polypropylene, or a biopolymer chosen from polylactic acid (PLA), polyhydroxyalkanoate (PHA), a material of vegetable origin such as a starch derivative, alone or optionally mixed with one or more **polyolefins.**

5. Use according to any one of claims 1 to 4, **characterized in that** one or more reinforcing filler(s) and/or one or more fire retardant filler(s) and/or one or more UV stabilizers or heat resistance stabilisation package is (are) added to the plastic material.

6. Use according to claim 5, **characterized in that** the reinforcing filler is chosen from mineral or organic fillers, nanoparticles, conductive fillers, long or short glass fibres, organic fibres, natural fibres, preferably natural and/or organic fibres.

7. Use according to any one of claims 1 to 6, **characterized in that** the solar panel also comprises means of external connection.

8. Use according to any one of claims 1 to 7, **characterized in that** the solar panel also comprises a frame moulded by extrusion blow moulding, advantageously glazed, and advantageously insulating.

9. Use according to any one of claims 1 to 8, **characterized in that** it also comprises, simultaneously or independently, one or more means of absorption of the sun's rays and one or more means of fastening the collector to a support.

10. Use according to claim 1, **characterized in that** the container is an independent hot water storage unit constituted by one or more sub-elements and comprising cartridges/tanks containing a fluid.

11. Use according to claim 1, **characterized in that** the cartridges/tanks containing a fluid the phase transition with temperature of which ensures that the required temperature is maintained is connected or incorporated into the solar panel.
